# EUROPEAN PATENT APPLICATION

(11) **EP 2 075 234 A1**
(43) Date of publication of application: **01.07.2009**
(21) Application number: 07123553.5
(22) Date of filing: 19.12.2007
(51) Int. Cl.: C02F 1/66

(54) **A process for lowering the pH of a water stream**

(71) Applicant: SHELL INTERNATIONALE RESEARCH MAATSCHAPPIJ B.V., 2596 HR Den Haag (NL)
(72) Inventor: Mesters, Carolus Matthias Anna Maria, 1031 CM Amsterdam (NL); Moors, Jeroen Harrie, Doha (QA); Schoonebeek, Ronald Jan, CM amsterdam (NL)
(74) Representative: Zeestraten, Albertus W. J.

(57) **Abstract**

A process for lowering the pH of a water stream, the process comprising the following steps:
(a) contacting a stream of molecular-oxygen containing gas with liquid elemental sulphur at a temperature in the range of from 120 to 160 °C to obtain a stream of sulphur dioxide containing gas; and
(b) contacting the stream of sulphur dioxide containing gas obtained in step (a) with the water stream to obtain a water stream having a lower pH.

## Description

### Field of the invention

The present invention provides a process for lowering the pH of a water stream, in particular for lowering the pH of a water stream that is to be fed to a water treatment unit such as a nanofiltration membrane, a reverse osmosis membrane or a biological water treatment unit.

### Background of the invention

The acidity of water streams that are to be supplied to water treatment units such as nanofiltration or reverse osmosis membranes or a biological water treatment unit often need to be controlled within operating limits. Deviations outside these operating limits are adjusted by adding an acid or a base. Lowering the pH of a such water stream is typically done by adding an inorganic or organic acid, often sulphuric acid. Although high concentrations of mineral acids are more efficient in lowering the pH, in that less volume is required, the control of the pH within the limits of operation is difficult using highly concentrated acid. Therefore one prefers a stream of diluted acid to lower the pH.

If the water stream of which the pH is to be adjusted is at a remote location, the provision of chemical process additives, such as for example diluted mineral acids or the combination of a concentrated mineral acid and sufficient water, is not always straightforward. It would therefore be advantageous if diluted acid could be produced in-situ from compounds that are available at that location or from compounds that are be easy to transported or handle.

It is known that sulphurous acid can be produced by introducing sulphur dioxide into an aqueous solution. Reference is for example made to WO 02/16261.

Sulphur dioxide is usually produced by combustion of elemental sulphur with dry air in a furnace at very high temperature, typically above 1,000 °C.

### Summary of the invention

It has now been found that the pH of water streams can be lowered by contacting the water stream with an in-situ produced gas stream comprising a small amount of sulphur dioxide. The sulphur dioxide comprising gas stream is produced by contacting liquid elemental sulphur at mild temperature with a molecular oxygen containing gas such as air.

Accordingly, the present invention provides a process for lowering the pH of a water stream, the process comprising the following steps:
(a) contacting a stream of molecular-oxygen containing gas with liquid elemental sulphur at a temperature in the range of from 120 to 160 °C to obtain a stream of sulphur dioxide containing gas; and
(b) contacting the stream of sulphur dioxide containing gas obtained in step (a) with the water stream to obtain a water stream having a lower pH.

An important advantage of the process according to the invention is that the pH of a water stream can be controlled without the need for handling and transportation of acids such as for example sulphuric acid.

The process according to the invention is particularly advantageous for pH control of water streams that are in the vicinity of a sulphur recovery unit that produces elemental sulphur. An example of a sulphur recovery unit is a Claus unit for the recovery of elemental sulphur from hydrogen sulphide, typically hydrogen sulphide that is removed from a hydrocarbonaceous stream, e.g. natural gas, a hydrogen sulphide containing gas stream from a crude oil refinery, or synthesis gas.

Another advantage is that the volume of elemental sulphur that is needed for lowering the pH of a water stream is much smaller than the volume of acid that would be needed for the same pH lowering.

### Detailed description of the invention

In step (a) of the process according to the invention, a stream of molecular-oxygen containing gas is contacted with liquid elemental sulphur at a temperature in the range of from 120 to 160 °C. In this step, part of the elemental sulphur is oxidised into sulphur dioxide and a stream of sulphur dioxide containing gas is obtained. In step (b), the stream of sulphur dioxide containing gas is contacted with the water stream of which the pH needs to be lowered to obtain a water stream having a lower pH.

The molecular-oxygen containing gas may be any suitable molecular-oxygen containing gas, preferably air, oxygen-enriched air or pure oxygen. Air is most preferred. Step (a) is carried out in such way that the elemental sulphur remains liquid. This means that the temperature of the elemental sulphur is to be maintained in the range of from 120 to 160 °C, preferably of from 130 to 150 °C. Below 120 °C most sulphur polymorphs will solidify; above 160 °C, polymerised sulphur will be formed.

Step (a) may be carried out at any suitable pressure, preferably in the range of from 1 to 10 bar. It is an advantage that step (a) may be carried out at ambient pressure. Preferably step a) is carried out at sufficiently high pressure that step b) can be carried out without re-compressing the sulphur dioxide containing gas stream.

In step (a) any reactor arrangement suitable for gas-liquid contact may be used. Typically, step (a) is carried out by bubbling the molecular oxygen containing gas through the liquid sulphur.

The supply rate of the molecular oxygen containing gas is not critical, provided that the gas flow rate does not result in cooling of the sulphur to a temperature below 120 °C.

The liquid sulphur may comprise a solid oxidation catalyst. Suitable oxidation catalysts are known in the art. Preferably, the oxidation catalyst comprises iron oxide.

This sulphur dioxide gas stream comprises sulphur dioxide, sulphur trioxide, unconverted oxygen and unconverted inert gases that were present in the feed stream of molecular oxygen containing gas.

In step (b), the sulphur dioxide-containing gas stream obtained in step (a) is contacted with a water stream. The sulphur dioxide will react with water to form sulphurous acid thereby lowering the pH of the water stream. The amount of sulphur dioxide contacted with the water stream can be adjusted to obtain the desired pH.

The water stream that is contacted with sulphur dioxide-containing air in order to lower the pH may be any water stream of which the pH need to be lowered in order to make it a suitable supply stream for a further processing step. Examples of such streams are feed water for nanofiltration or reverse osmosis membrane units, feed water for a biological water treatment unit, effluents from water treating units that need pH adjustment before being discharged to the environment.

The elemental sulphur used in step (a) preferably is elemental sulphur obtained by conversion of hydrogen sulphide into elemental sulphur.

Hydrogen sulphide may for example be converted into elemental sulphur in a Claus unit. Alternatively, hydrogen sulphide may be converted into elemental sulphur by catalytically oxidising hydrogen sulphide contained in a hydrocarbonaceous gas stream into elemental sulphur, for example by means of a selective catalytic oxidation process as disclosed in WO2005/030638. In the process of WO2005/030638, a hydrogen sulphide containing hydrocarbonaceous stream, typically natural gas, and a molecular-oxygen containing gas are contacted with a solid oxidation catalyst in the presence of liquid elemental sulphur. Thus, the hydrogen sulphide is selectively, i.e. without substantial oxidation of the hydrocarbons, oxidised into elemental sulphur. Elemental sulphur produced in such a selective catalytic oxidation process may suitably be used in step (a) of the process according to the invention. The solid oxidation catalyst used in the selective catalytic oxidation process may also be used in step (a) of the process according to the invention. Therefore, in a preferred embodiment, elemental sulphur and catalyst of a selective catalytic oxidation process such as disclosed in WO2005/030638 may be used, i.e. without separation of the catalyst from the elemental sulphur, in step (a) of the process according to the invention.

It will be appreciated that the process according to the invention can suitably be combined with a process for the processing of sulphur-containing hydrocarbonaceous streams, wherein the hydrocarbonaceous stream is desulphurised and elemental sulphur is recovered in a sulphur recovery unit. Examples of such processes are the liquefaction of sulphur-containing natural gas, the conversion of sulphur-containing natural gas into synthesis gas for subsequent conversion into liquid hydrocarbons by Fischer-Tropsch synthesis, coal gasification, and hydrodesulphurisation processes in crude oil refining.

The process according to the invention is therefore particularly suitable for lowering the pH of water streams that are in the vicinity of crude oil refineries, natural gas liquefaction plants, coal gasification plants, or plants for the conversion of natural gas into liquid hydrocarbons, especially if these are at remote locations. The water stream may for example be a feed or production stream in a water treating process for producing drinking or irrigation water at the location of a crude oil refinery, a natural gas liquefaction plant, a coal gasification plant, or a plant for the conversion of natural gas into liquid hydrocarbons.

More preferably, the process according to the invention is used for lowering the pH of water streams used or produced in a crude oil refinery, a natural gas liquefaction plant, a coal gasification plant, or a plant for the conversion of natural gas into liquid hydrocarbons.

### Examples

The invention will be further illustrated by means of the following examples.

### EXAMPLE 1

A quartz reactor tube with an internal diameter of 13 mm was filled with 18 grams of elemental sulphur. The tube was placed in an oven and heated to a temperature of 140 °C in order to melt the sulphur. Air was then bubbled through the liquid elemental sulphur at a flow rate of 0.7 normal litres/hour. Effluent gas was bubbled through a glass vessel filled with 88 ml of demineralised water having a pH of 5.7. The flow rate of the effluent gas was 0.7 normal litres/hour and the temperature of the water was 20 °C. Reference herein to normal litres is to litres at conditions of standard temperature and pressure, i.e. 0 °C and 1 atmosphere.

After 1.5 hours of bubbling the effluent gas through the water, the pH of the water was 3.7.

### EXAMPLE 2

The experiment of EXAMPLE 1 was repeated, but now with 0.9 grams 40-70 mesh catalyst particles comprised of 15 wt% iron oxide (Fe₂O₃) supported on silica dispersed in the liquid sulphur. The sulphur dioxide concentration in the effluent gas from the tube filled with liquid sulphur was measured with gas chromatography. The sulphur dioxide concentration was 500 ppm (v/v).

After 1.5 hours of bubbling the effluent gas through the water, the pH of the water was 3.2.

### EXAMPLE 3

In order to prevent deposits of calcium and/or magnesium salts on a reverse osmosis membrane, a lowering of the pH of the feed water with 0.5-1.0 points is typically needed. In order to lower the pH with sulphuric acid, a 10 wt% sulphuric acid solution needs to be added to the feed water at a flow rate of 75 ml per cubic metre feed water. For a reverse osmosis unit with an intake of 2.5 cubic metres per hour, this means a need for 4.5 litres of 10 wt% sulphuric acid solution per day. In order to have a storage for 200 days, a storage vessel of 1 cubic metre would be needed.

Using the process according to the invention for lowering the pH of the feed water for the same reverse osmosis unit, approximately 150 grams of sulphur dioxide needs to be produced in-situ per day. A vessel with 100 litres of liquid sulphur would be more than sufficient for 200 days production (in 170 days about half of the sulphur would be consumed).

## Claims

1. A process for lowering the pH of a water stream, the process comprising the following steps:
(a) contacting a stream of molecular-oxygen containing gas with liquid elemental sulphur at a temperature in the range of from 120 to 160 °C to obtain a stream of sulphur dioxide containing gas; and
(b) contacting the stream of sulphur dioxide containing gas obtained in step (a) with the water stream to obtain a water stream having a lower pH.

2. A process according to claim 1, wherein the stream of molecular-oxygen containing gas is contacted with liquid elemental sulphur at a temperature in the range of from 130 to 150 °C.

3. A process according to claim 1 or 2, wherein the water stream is feed water for a nanofiltration membrane or a reverse osmosis membrane.

4. The process according to claim 1 or 2, wherein the water stream is feed water for a biological water treatment unit.

5. A process according to any one of the preceding claims, wherein the liquid elemental sulphur that is contacted with the stream of molecular-oxygen containing gas in step (b) comprises a solid oxidation catalyst, preferably an oxidation catalyst comprising iron oxide.

6. A process according to any one of the preceding claims, wherein the elemental sulphur used in step (a) is obtained by conversion of hydrogen sulphide into elemental sulphur.

7. A process according to claim 6, wherein the conversion of hydrogen sulphide into elemental sulphur is carried out in a Claus unit.

8. A process according to claim 6, wherein the conversion of hydrogen sulphide into elemental sulphur is carried out by contacting a hydrogen sulphide containing hydrocarbonaceous feedstock and a molecular-oxygen containing gas with a solid oxidation catalyst in the presence of liquid elemental sulphur.

9. A process according to claim 8, wherein the hydrocarbonaceous feedstock is natural gas.
